**Europäisches Patentamt**

**European Patent Office**

**Office européen des brevets**

(19)

(11) Veröffentlichungsnummer : **0 195 205 B1**

(12)

# EUROPÄISCHE PATENTSCHRIFT

(45) Veröffentlichungstag der Patentschrift : 07.06.89

(51) Int. Cl.⁴ : **C 04 B 41/50, F 16 K 25/00**

(21) Anmeldenummer : 86101180.7

(22) Anmeldetag : 30.01.86

(54) **Mit keramischen Werkstoffkomponenten beschichtetes Gleitelement und seine Verwendung.**

(30) Priorität : 16.03.85 DE 3509572

(43) Veröffentlichungstag der Anmeldung : 24.09.86 Patentblatt 86/39

(45) Bekanntmachung des Hinweises auf die Patenterteilung : 07.06.89 Patentblatt 89/23

(84) Benannte Vertragsstaaten :
BE CH DE FR IT LI LU NL SE

(56) Entgegenhaltungen :
EP—A— 0 005 632
EP—A— 0 043 456
DE—A— 2 834 146
DE—B— 1 291 957
DE—C— 3 144 192
US—A— 4 112 148
US—A— 4 406 670
US—A— 4 485 143

(73) Patentinhaber : **Feldmühle Aktiengesellschaft**
**Fritz-Vomfelde-Platz 4**
**D-4000 Düsseldorf 11 (DE)**

(72) Erfinder : **Dworak, Ulf, Dr.Dipl.-Mineraloge**
**Pfarrstrasse 50**
**D-7066 Baltmannweiler (DE)**
Erfinder : **Fingerle, Dieter, Dr.Dipl.-Ing.**
**Kirchheimer Strasse 34**
**D-7311 Hochdorf (DE)**
Erfinder : **Olapinski, Hans, Dr.Dipl.-Chem.**
**Talstrasse 12**
**D-7307 Aichwald 1 (DE)**
Erfinder : **Friederich, Kilian, Dr.Dipl.-Ing.**
**Hohenstaufenstrasse 34**
**D-7310 Plochingen (DE)**

## Beschreibung

Die vorliegende Erfindung betrifft ein Gleitelement, das an seiner oder seinen Funktionsflächen mit einer oder mehreren keramischen Werkstoffkomponenten beschichtet ist und das im reibenden Eingriff mit mindestens einem weiteren Gleitelement steht, und seine Verwendung.

Gleitelemente der eingangs beschriebenen Art sind bekannt. Hierzu gehören z. B. Gleitringe von Gleitringdichtungen, wie sie in Form von mit Keramikwerkstoffen beschichteten metallischen Trägerkörpern, z. B. in den DE-U-17 77 610 und 77 18 782 beschrieben sind. Der Auftrag der Beschichtung erfolgt dabei nach dem· Plasmaspritz-Verfahren, zumeist in einer Dicke von ca. 100 µm. Die aufgetragene Beschichtung wird dabei in der für Keramikwerkstoffe üblichen Weise einer Nachbehandlung in Form von Schleifen und Läppen unterzogen. So gesehen unterscheiden sich die Oberflächen dieser Beschichtungen nicht von den ebenfalls bekannten, einheitlich aus einer oder einer Mischung mehrerer keramischen Komponenten bestehenden unbeschichteten Vollkeramikkörpern, wie sie ebenfalls als Gleitring oder aber als Dichtscheibe fur Mischbatterien eingesetzt werden. Entsprechende Veröffentlichungen hierzu finden sich in der

DE-B- 12 82 377
FR-A- 14 54 755
DE-B- 12 91 957
DE-A- 28 34 146
EP-B- 43 456.

Weitere Vorschläge finden sich in der DE-A- 27 11 500, die zur Verwendung in einem Mischventil ein mit einer Polytetrafluoräthylen-Beschichtung versehenes metallisches Bauteil vorsieht.

Allen diesen Vorschlägen haften noch gewisse Nachteile an, insbesondere liegen diese Nachteile darin, daß die älteren, unbeschichteten Vollkeramik betreffenden Vorschläge, den Nachteil einer zu hohen Haftreibung aufwiesen, weshalb die Anmelderin in der vorerwähnten EP-B- 43 456 auch bereits eine spezielle Mischung keramischer Werkstoffkomponenten zur Erzielung eines besonders niedrigen Profiltraganteils vorgeschlagen hat. Dieser Vorschlag überwindet zwar erstmalig das Vorurteil, das bisher darin bestanden hat, eine ausreichende Abdichtwirkung sei nur mit einem hohen Profiltraganteil zu erzielen, jedoch beinhaltet dieser Vorschlag auch noch gewisse, fertigungstechnische Nachteile, die dadurch entstehen, daß infolge der außerordentlich hohen Feinheit der keramischen Ausgangspulver in vielen Fällen die Fertigungskosten infolge des hohen Energieverbrauchs ein wirtschaftlich vertretbares Maß überschreiten.

In der IT-A 67 746 A/82 wurden auch bereits Gleitelemente aus Hartmaterialien mit unterschiedlichen Eigenschaften vorgeschlagen, wobei mindestens eines der Plättchen aus Siliziumkarbid bestehen soll. Dabei soll eine Reibungsverminderung dadurch entstehen, daß Reibungselemente mit größerer Härte kombiniert werden mit Gleitelementen einer geringeren Härte bzw. einer weniger glatten Oberfläche, wodurch die Berührungsfläche zwischen den beiden zusammenwirkenden Gleitelementen verringert und dadurch eine geringere Reibung erzielt werden soll. Die Nachteile dieses Vorschlags liegen in den relativ hohen Kosten des Siliziumkarbids und darin, daß infolge der unterschiedlichen Härte der Gleitelemente, das härtere der beiden Gleitelemente quasi als oberflächenbearbeitendes Werkzeug für das weniger harte andere Gleitelement wirksam wird und dabei eine unerwünschte Oberflächenveränderung des weniger harten Gleitelementes resultiert.

Im Vergleich zu diesen vorerwähnten Vorschlägen bestehen die Nachteile der mit keramischen Werkstoffen beschichteten metallischen Formkörper darin, daß keine Übereinstimmung in den thermischen Ausdehnungskoeffizienten zwischen metallischem Trägerkörper und Beschichtung besteht und diese Gleitelemente daher in bestimmten thermisch hoch beanspruchten Einsatzgebieten nicht verwendet werden können, weil im Falle eines Thermoschocks die Gefahr besteht, daß die Beschichtung vom Trägerkörper abplatzt. Bereits Mikroausbrüche führen dabei zu einem dramatischen Nachlassen der Dichtwirkung. Ein weiterer Nachteil besteht auch in der Korrosion zwischen Metall und Keramik. Zudem geht die Oberflächenbeschaffenheit bei keramikbeschichteten metallischen Gleitelementen nicht über die Qualität der sogenannten Vollkeramikgleitelemente hinaus und diese Gleitelemente weisen daher auch relativ hohe Reibungswerte auf.

Die vorliegende Erfindung hat sich die Aufgabe gestellt, ein Gleitelement zu entwickeln, das, wenn es im reibenden Eingriff mit einem ihm in seiner Form angepaßten weiteren Gleitelement steht, einen geringen Reibungskoeffizienten, insbesondere einen geringen Haftreibungskoeffizienten aufweist. Gleichzeitig soll das Gleitelement, wenn das vorgesehene Einsatzgebiet dieses erfordert, auch eine ausgezeichnete abdichtende Wirkung aufweisen, es soll eine verbesserte Thermoschockbeständigkeit und Korrosionsfestigkeit aufweisen. Ferner soll die Verwendung eines derartigen Gleitelements festgelegt werden.

Zur Lösung dieser Aufgabe sieht die Erfindung bei einem Gleitelement der eingangs erwähnten Art die kennzeichnenden Merkmale von Anspruch 1 vor. Die Verwendung dieses Gleitelements ist in den Ansprüchen 12 und 13 beschrieben.

Vorteilhafte Ausbildungen des Gleitelements nach Anspruch 1 sind in den Ansprüchen 2 bis 11 angeführt.

Die in Ansprüchen und Beschreibung gemachten Angaben zur Korngröße der Beschichtung beziehen sich auf parallel zur Beschichtungsebene gefertigte Schliffpräparate.

Es lassen sich deutlich verringerte Reibungskoeffizienten bei Gleitelementen erzielen, wenn eine feinkörnige und sehr dünne — nicht nachbearbeitete — Beschichtung auf einen eben bearbeiteten Trägerkörper aufgebracht wird, auch unter der Voraussetzung, daß der Trägerkörper infolge der an ihm vorgenommenen Oberflächenbehandlung einen hohen Profiltraganteil hat.

Zur Realisierung wird dabei zurückgegriffen auf chemische und physikalische Aufdampfverfahren, wie sie in ganz anderen Bereichen der Technik, nämlich bei der Beschichtung von Schneidplatten von zumeist aus Hartlegierungen bestehenden Formkörpern eingesetzt wurden. Ein solches Verfahren ist z. B. aus der DE-C 31 44 192 bekannt.

Durch die Maßnahme, die Formkörper vor ihrer Beschichtung zu schleifen und/oder zu läppen, weisen die Gleitelemente — auch nach der Beschichtung — eine ausgezeichnete Ebenheit auf, wie sie z. B. bei als Dichtscheiben eingesetzten Gleitelementen verlangt wird. Gleitelemente mit gekrümmt verlaufenden Funktionsflächen erhalten durch diese Vorbehandlung des Formkörpers die für ihre Anwendung erforderliche Toleranz. Infolge ihrer Ebenheit bzw. ihrer Toleranz wirken die Gleitelemente auch in hohem Maße abdichtend, wenn sie als Maschinenbauteil z. B. dort eingesetzt werden, wo es auf eine hohe Abdichtung ankommt.

Durch die in außerordentlich geringer Dicke ausgebildete Beschichtung mit einer Kornfeinheit, die vorzugsweise den Bereich von 0,5 μm nicht überschreitet, ergibt sich ein sehr geringer Profiltraganteil dadurch, daß die in außerordentlicher Gleichmäßigkeit aufgetragene Beschichtung keinerlei Nachbearbeitung, wie z. B. Schleifen oder Läppen, erfordert. In fertigungstechnischer Hinsicht ergibt sich gegenüber den bekannten, durch Plasmaspritzen beschichteten Gleitelementen insofern ein Unterschied, als dabei eine Oberflächenbearbeitung der Beschichtung durch Schleifen und Läppen vorgenommen wurde und dabei sich erst die notwendige Ebenheit einstellte, allerdings erkauft mit einem die Reibung erhöhenden hohen Profiltraganteil.

Für die Ausbildung eines geringen Profiltraganteils sprechen die sehr geringen Reibungswerte der Gleitelemente, wie sie in der unten stehenden Tabelle festgehalten sind. Die nachfolgende Tabelle gibt die Durchschnittswerte aus vier Einzelmessungen wieder, die in Bezug auf Trockengleit- und -haftreibung an den genannten und bekannten Gleitelementen ermittelt wurden, die durch Beschichtung eines an sich bekannten aus hochreiner Aluminiumoxidkeramik bestehenden Trägerkörpers mit verschiedenen keramischen Werkstoffen hergestellt wurden. Die genannten Gleitelemente standen dabei in reibendem Eingriff mit einem unbeschichteten Gleitelement aus hochreiner Aluminiumoxidkeramik.

Tabelle

| Beschichtungs-komponente | Gleitreibungs-koeffizient $\mu$ | Haftreibungs-koeffizient $\mu_0$ (Lösekraft) |
|---|---|---|
| Aluminiumoxid | 0,105 | 0,154 |
| Titannitrid | 0,09 | 0,153 |
| Titankarbonitrid | 0,133 | 0,197 |
| Vergleichsversuche: bekannte Gleitelemente gemäß EP-B- 43 456 | 0,196 | 0,379 |
| bekannte Gleitelemente aus hochreiner Aluminiumoxidkeramik | 0,4 | 0,45 |

3

Zur Herstellung der Beschichtungen können Chloride der geeigneten Metalle verwendet werden, z. B. für Titannitrid- oder Titankarbidbeschichtungen Titantetrachlorid, wobei als geeignetes Gas Ammoniak zugesetzt wird und im Falle des Titankarbids zusätzlich Methangas Anwendung findet. Für die Herstellung von Titankarbonitridbeschichtungen werden Gasmischungen aus Ammoniak und Methan verwendet. Zur Herstellung einer Aluminiumoxidschicht wird Aluminiumchlorid als Ausgangsmaterial eingesetzt und dabei als Sauerstoffträger Wasserdampf angewendet.

Als besonders bevorzugte Ausführungsform weist das Gleitelement eine Beschichtung mit einer Dicke von 0,8 bis 3 µm auf. Eine Beschichtung in dieser äußerst geringen Dicke ist insbesondere dann von Vorteil, wenn die Gleitelemente nicht nur eine sehr geringe Reibung aufweisen, sondern auch abdichtend wirken sollen, weil eine derart geringe Dicke der Beschichtung die Kontur des geschliffenen und geläppten Trägerkörpers nahezu unverändert wiederspiegelt und dadurch ein Gleitelement von nahezu unveränderter Ebenheit entsteht.

Gemäß weiteren bevorzugten Ausführungsformen besteht der Trägerkörper aus keramischen Werkstoffen auf Basis von Aluminiumoxid, Mullit, Zirkonsilikat, Zirkonoxid, Hafniumoxid, Aluminiummagnesiumspinell, Siliziumkarbid, Siliziumnitrid oder einer Mischung dieser Komponenten. Die Möglichkeit, unter diesen Werkstoffen wählen zu können, ermöglicht es, die Gleitelemente auf das ins Auge gefaßte Einsatzgebiet speziell abzustimmen. So wird man beispielsweise als biokompatiblen Werkstoff besonders bevorzugt Aluminiumoxid verwenden oder, wenn besondere Korrosionsfestigkeit gewünscht wird, einen Trägerkörper aus Aluminiumoxid, Zirkonoxid, Siliziumkarbid oder Siliziumnitrid wählen.

Gemäß weiteren bevorzugten Ausführungsformen der Erfindung besteht die Beschichtung aus den Oxiden, Nitriden, Karbiden oder Boriden des Aluminiums, Zirkoniums, Titans, Hafniums, Vanadiums, Niobs, Siliziums, Tantals, Chroms, Molybdäns und Wolframs oder deren Kombinationen. Zur Erzielung von besonders korrosionsfesten Beschichtungen sind dabei die Oxide des Aluminiums und Zirkoniums sowie Siliziumkarbid und Siliziumnitrid geeignet, während zur Herstellung besonders harter Beschichtungen Titannitrid, Titankarbid und Titankarbonitrid geeignet sind.

Zur sicheren Verbindung der Beschichtung mit dem Trägerkörper kann es notwendig werden, eine Zwischenschicht zur Haftvermittlung für die Beschichtung vorzusehen. Bei verschiedenen Trägerkörperkombinationen und keramischen Werkstoffkomponenten für die Beschichtung können auch mehrere Zwischenschichten gemäß einer bevorzugten Ausführungsform angewendet werden, wobei jeweils eine Zwischenschicht die Haftung gegenüber der nächsten Zwischenschicht verbessert. Für verschiedene Anwendungsgebiete hat sich aber ein Gleitelement ohne Zwischenschicht als absolut ausreichend erwiesen. Für Gleitelemente mit einer Beschichtung aus Aluminiumoxid hat sich als besonders zweckmäßig eine Zwischenschicht aus Titankarbonitrid erwiesen. Auch hierbei hat es sich zur Beibehaltung der Konturen des Trägerkörpers und damit der Toleranz bzw. der Ebenheit als zweckmäßig erwiesen, die Zwischenschicht in einer Dicke bis zu 2 µm herzustellen.

Die Wahl des Beschichtungsverfahrens (PVD oder CVD) ist an sich nicht kritisch, jedoch hat sich für komplizierte Bauformen und eine allseitige Beschichtung das CVD-Verfahren als besonders geeignet erwiesen, während das PVD-Verfahren infolge der relativ niedrigen Arbeitstemperaturen von 200 bis 400 °C im Vergleich zu 1 000 °C beim CVD-Verfahren ein wirtschaftlicher Hinsicht gewisse Vorteile bietet.

Gemäß weiteren bevorzugten Ausführungsformen besteht der Trägerkörper aus Aluminiumoxid und ist mit einer Beschichtung ebenfalls aus Aluminiumoxid oder aus Siliziumnitrid, Siliziumkarbid, Titannitrid, Titankarbid oder Titankarbonitrid versehen. Zur Herstellung des Trägerkörpers sind Mischungen besonders bevorzugt, die zumindest zu 90 Gew.% aus Aluminiumoxid, Rest eines oder mehrere der Oxide des Magnesiums, Siliziums, Titans und Zirkons bestehen, die auch unter dem Begriff Aluminiumoxid zu verstehen sind. Mit Aluminiumoxid beschichtete Trägerkörper aus Aluminiumoxid sind besonders biokompatibel und diese Gleitelemente können daher bevorzugt zur Herstellung von künstlichen Gelenkprothesen verwendet werden. Beschichtungen aus Titankarbid und Titankarbonitrid sind deswegen bevorzugt, weil ohne Zwischenschicht bereits eine ausgezeichnete Verbundfestigkeit auf Trägerkörpern aus Aluminiumoxid erzielbar ist.

Die genannten Gleitelemente können in vielen Bereichen der Technik angewendet werden. Besonders bevorzugt ist die Verwendung eines erfindungsgemäßen Gleitelementes, das einen Trägerkörper aus Aluminiumoxid aufweist, der mit einer Beschichtung aus Aluminiumoxid versehen ist, als Dichtscheibe in einem Mischventil, das auch unter der Bezeichnung Einhandmischer oder sanitäre Mischbatterie bekannt ist. Ein anderer bevorzugter Anwendungsbereich ist die Verwendung von Gleitelementen, die einen Trägerkörper aus Aluminiumoxid und Beschichtungen aus Titannitrid, Titankarbonitrid oder Titankarbid aufweisen als Gleitring bei einer Gleitringdichtung.

Die nachfolgenden Beispiele und die Beschreibung der Figuren dienen der näheren Erläuterung der Erfindung.

## Beispiel 1

Zur Herstellung einer für sanitäre Mischbatterien vorgesehenen Dichtscheibe, die zum Eingriff mit einer weiteren üblichen Dichtscheibe aus Aluminiumoxid vorgesehen ist, wird ein Trägekörper aus einer Pulvermischung, bestehend aus 99,2 Gew.% Aluminiumoxid, 0,5 Gew.% Magnesiumoxid und 0,3 Gew.%

Siliziumoxid hergestellt, indem die Pulvermischung auf eine Feinheit von $d_{50} = 0,8$ μm gemahlen wird und aus der Pulvermischung eine Dichtscheibe geformt und gesintert wird. Nach Abkühlung wird die Dichtscheibe durch Schleifen und Läppen auf eine Ebenheit von 2 Heliumlichtbändern bearbeitet. Es wird ein Profiltraganteil von 80 % gemessen, entsprechend dem Meßverfahren, wie es in der EP-B- 43 456 beschrieben ist.

Auf der zur Ausbildung der Funktionsfläche vorgesehenen Seite der Dichtscheibe wird eine Zwischenschicht aus Titankarbonitrid mit einer Dicke von 0,5 μm nach dem CVD-Verfahren aufgetragen. Unmittelbar daran anschließend wird eine Beschichtung aus reinem $Al_2O_3$ mit einer Dicke von 2 μm aufgetragen, die die Funktionsfläche bildet. Die mittlere Korngröße der Beschichtung beträgt 0,5 μm. Die Reibung der ·Dichtscheibe gegen eine Standard-Dichtscheibe aus reiner Aluminiumoxidkeramik wurde ermittelt mit :

| Gleitreibungskoeffizient | Haftreibungskoeffizient |
|---|---|
| μ | $μ_0$ |
| 0,09 | 0,13 |

Eine Vergleichsmessung des in diesem Beispiel beschriebenen Trägerkörpers in Form einer Dichtscheibe vor der Beschichtung mit der CVD-Schicht aus Titankarbonitrid ergibt :

| Gleitreibungskoeffizient | Haftreibungskoeffizient |
|---|---|
| μ | $μ_0$ |
| 0,25 | 0,42 |

Die Messung der Reibungswerte zeigt, daß durch die Beschichtung eine wesentlich geringere Reibung erreicht werden konnte.

## Beispiel 2

Auf den in Beispiel 1 beschriebenen Trägerkörper wird ohne Zwischenschicht eine Schicht aus Titankarbonitrid mit einer Dicke von 2,5 μm aufgetragen. Die Korngröße der Beschichtung beträgt 0,3 μm. Es wurde ein Gleitreibungskoeffizient von 0,1 und ein Haftreibungskoeffizient von 0,17 gegen die in Beispiel 1 beschriebene Standard-Dichtscheibe aus Aluminiumoxid ermittelt.

## Beispiel 3

Ein Gleitring einer Gleitringdichtung wird hergestellt, indem ein Trägerkörper aus 98 Gew.% Aluminiumoxid, 0,8 Gew.% Magnesiumoxid und 1,2 Gew.% Siliziumoxid nach dem in Beispiel 1 beschriebenen Verfahren hergestellt wird und nach Schleifen und Polieren auf eine Ebenheit von 2 Heliumlichtbändern der Trägerkörper mit einer Beschichtung aus Titankarbonitrid in einer Dicke von 5 μm nach dem CVD-Verfahren beschichtet wird. Die ermittelten Reibungswerte entsprechen den Werten von Beispiel 1.

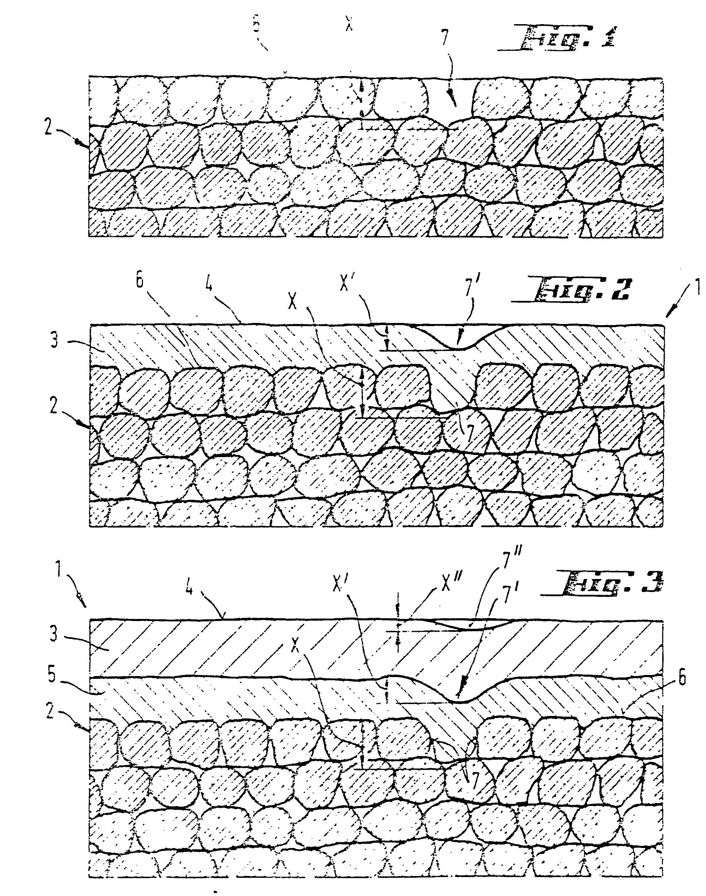

In den Figuren zeigen :
Fig. 1 in schematischer Darstellung — im Querschnitt — einen Ausschnitt eines Trägerkörpers,
Fig. 2 in schematischer Darstellung — im Querschnitt — den in Figur 1 gezeigten Trägerkörper nach erfolgter Beschichtung,
Fig. 3 in schematischer Darstellung — im Querschnitt — eine weitere Ausführungsform eines Gleitelementes mit einer Zwischenschicht.
Bei dem in Fig. 1 gezeigten Trägerkörper 2 handelt es sich um ein bekanntes Gleitelement, das an seiner Oberfläche 6 geschliffen und geläppt ist. Eine Kornausbruchsstelle 7, die beim Schleifprozeß entstanden ist, weist eine Tiefe X auf und ist in stark vergrößerter Darstellung gezeigt.
Das in Fig. 2 gezeigte Gleitelement 1 ist durch Auftrag einer Beschichtung 3 nach dem CVD-Verfahren auf der Oberfläche 6 des in Fig. 1 gezeigten Trägerkörpers 2 entstanden. Die Beschichtung 3 weist eine Dicke von 1,8 μm auf und folgt in ihrer Kontur der Kontur der Oberfläche 6 des Trägerelementes 2, wie dieses im Bereich der Kornausbruchsstelle 7 erkennbar ist. Die Oberfläche des Beschichtung 3 bildet die Funktionsfläche 4 des Gleitelementes 1. Die im Bereich der Kornausbruchstelle 7 auftretende Vertiefung 7' hat eine Tiefe von X'.
Zur Herstellung des in Fig. 3 gezeigten Gleitelementes 1 wurde der zu Fig. 1 beschriebene Trägerkörper 2 verwendet. Eine Zwischenschicht 5 mit einer Dicke von 0,5 μm wurde nach dem CVD-Verfahren aufgetragen und eine Beschichtung 3, die die Funktionsfläche 4 bildet, über der Zwischenschicht 5 in einer Dicke von 1,6 μm angebracht. Auch hier ist erkennbar, daß Zwischenschicht 5 bzw.

5

Beschichtung 3 der Kontur der Oberfläche 6 des Trägerkörpers 2 folgen. Eine Vertiefung 7″ im Bereich der Kornausbruchstelle 7 bzw. der Vertiefung 7′ hat eine Tiefe von X″.

Es ist ausdrücklich darauf zu verweisen, daß die Beschichtung 3 der Kontur der Trägerkörpers 2 auch an solchen Stellen folgt, die feiner als die gezeigte Kornausbruchsstelle 7 ist. Aus Gründen der vereinfachten Darstellung wurde dieses jedoch nicht gezeigt.

**Patentansprüche**

1. Mit einer oder mehreren keramischen Werkstoffkomponenten an einer oder mehreren Funktionsflächen (4) beschichtetes erstes Gleitelement (1), das im reibenden Eingriff mit mindestens einem weiteren Gleitelement steht, dadurch gekennzeichnet, daß zumindest eines der Gleitelemente (1) einen durch Formen und Sintern keramischer Werkstoffe hergestellten, geschliffenen und/oder geläppten Trägerkörper (2) aufweist, der zumindest an seinen Funktionsflächen (4) eine nach dem chemischen oder physikalischen Bedampfungsverfahren (CVD oder PVD) erhaltene Beschichtung (3) aus einer oder mehreren keramischen Komponenten in einer Dicke von 0,2 bis 10 μm und einer 1 μm nicht überschreitenden Korngröße aufweist.

2. Gleitelement nach Anspruch 1, dadurch gekennzeichnet, daß der Trägerkörper (2) aus keramischen Werkstoffen auf Basis von Aluminiumoxid, Mullit, Zirkonsilikat, Zirkonoxid, Hafniumoxid, Aluminiummagnesiumspinell, Siliziumkarbid, Siliziumnitrid oder einer Mischung dieser Komponenten besteht.

3. Gleitelement nach den Ansprüchen 1 und 2, dadurch gekennzeichnet, daß die Beschichtung (3) aus Oxiden, Nitriden, Karbiden oder Boriden des Aluminiums, Zirkoniums, Titans, Hafniums, Vanadiums, Niobs, Tantals, Chroms, Molybdäns, Wolframs und Siliziums oder deren Kombinationen besteht.

4. Gleitelement nach den Ansprüchen 1 bis 3, dadurch gekennzeichnet, daß das Gleitelement (1) zusätzlich eine oder mehrere Zwischenschichten (5) zwischen Trägerkörper (2) und Beschichtung (3) aufweist.

5. Gleitelement nach Anspruch 4, dadurch gekennzeichnet, daß es eine Zwischenschicht (5) aus Titankarbonitrid aufweist.

6. Gleitelement nach den Ansprüchen 4 und 5, dadurch gekennzeichnet, daß die Zwischenschicht (5) eine Dicke bis zu 2 μm aufweist.

7. Gleitelement nach den Ansprüchen 1 bis 6, dadurch gekennzeichnet, daß der Trägerkörper (2) und die Beschichtung (3) aus Aluminiumoxid bestehen.

8. Gleitelement nach den Ansprüchen 1 bis 6, dadurch gekennzeichnet, daß der Trägerkörper (2) aus Aluminiumoxid und die Beschichtung (3) aus Siliziumnitrid bestehen.

9. Gleitelement nach den Ansprüchen 1 bis 6, dadurch gekennzeichnet, daß der Trägerkörper (2) aus Aluminiumoxid und die Beschichtung (3) aus Siliziumkarbid bestehen.

10. Gleitelement nach den Ansprüchen 1 bis 6, dadurch gekennzeichnet, daß der Trägerkörper (2) aus Siliziumnitrid und die Beschichtung (3) aus Aluminiumoxid bestehen.

11. Gleitelement nach den Ansprüchen 1 bis 6, dadurch gekennzeichnet, daß der Trägerkörper (2) aus Aluminiumoxid und die Beschichtung (3) aus Titannitrid, Titankarbid oder Titankarbonitrid bestehen.

12. Verwendung eines Gleitelementes nach Anspruch 7 als Dichtscheibe in einer Mischbatterie.

13. Verwendung eines Gleitelementes nach Anspruch 11 als Gleitring einer Gleitringdichtung.

**Claims**

1. A first sliding element (1), coated on one or more functional surfaces (4) with one or more ceramics material components, which is in frictional engagement with at least one further sliding element, characterised in that at least one of the sliding elements (1) has a ground and/or lapped support member (2) produced by shaping and sintering ceramics materials, which has at least on its functional surfaces (4) a coating (3), obtained by the chemical or the physical vaporising process (CVD or PVD), of one or more ceramics components of from 0.2 to 10 μm thick and of a particle size not exceeding 1 μm.

2. Sliding element according to claim 1, characterised in that the support member (2) consists of ceramics materials based on aluminium oxide, mullite, zirconium silicate, zirconium oxide, hafnium oxide, aluminium magnesium spinel, silicon carbide, silicon nitride or a mixture of those components.

3. Sliding element according to claims 1 and 2, characterised in that the coating (3) consists of oxides, nitrides, carbides or borides of aluminium, zirconium, titanium, hafnium, vanadium, niobium, tantalum, chromium, molybdenum, tungsten and silicon or combinations thereof.

4. Sliding element according to claims 1 to 3, characterised in that the sliding element (1) additionally has one or more intermediate layers (5) between the support member (2) and the coating (3).

5. Sliding element according to claim 4, characterised in that it has an intermediate layer (5) of titanium carbonitride.

6. Sliding element according to claims 4 and 5, characterised in that the intermediate layer (5) has a thickness of up to 2 μm.

6

7. Sliding element according to claims 1 to 6, characterised in that the support member (2) and the coating (3) consist of aluminium oxide.

8. Sliding element according to claims 1 to 6, characterised in that the support member (2) consists of aluminium oxide and the coating (3) consists of silicon nitride.

9. Sliding element according to claims 1 to 6, characterised in that the support member (2) consists of aluminium oxide and the coating (3) of silicon carbide.

10. Sliding element according to claims 1 to 6, characterised in that the support member (2) consists of silicon nitride and the coating (3) of aluminium oxide.

11. Sliding element according to claims 1 to 6, characterised in that the support member (2) consists of aluminium oxide and the coating (3) of titanium nitride, titanium carbide or titanium carbonitride.

12. Use of a sliding element according to claim 7 as a sealing disc in a mixer valve.

13. Use of a sliding element according to claim 11 as a sliding ring in a sliding ring seal.

**Revendications**

1. Premier élément de glissement (1) revêtu d'un ou de plusieurs composants en matériau céramique sur une ou plusieurs surfaces opérationnelles (4), qui est en contact frottant avec au moins un autre élément de glissement, caractérisé par le fait qu'au moins un des éléments de glissement (1) présente un corps de support (2) meulé et/ou rodé, produit par moulage et frittage de matériaux céramiques, qui présente au moins sur ses faces opérationnelles (4) un revêtement (3) obtenu selon le procédé de dépôt chimique ou physique en phase vapeur (CVD ou PVD), à base d'un ou plusieurs composants céramiques en une épaisseur de 0,2 à 10 $\mu$m et ayant une taille de grains n'excédant pas 1 $\mu$m.

2. Elément de glissement selon la revendication 1, caractérisé par le fait que le corps de support (2) est constitué de matériaux céramiques à base d'oxyde d'aluminium, mullite, silicate de zirconium, oxyde de zirconium, oxyde d'hafnium, spinelle (aluminate de magnésium), carbure de silicium, nitrure de silicium, ou d'un mélange de ces composants.

3. Elément de glissement selon les revendications 1 et 2, caractérisé par le fait que le revêtement (3) est à base d'oxydes, nitrures, carbures ou borures de l'aluminium, du zirconium, du titane, de l'hafnium, du vanadium, du niobium, du tantale, du chrome, du molybdène, du tungstène et du silicium, ou de combinaisons de ceux-ci.

4. Elément de glissement selon les revendications 1 à 3, caractérisé par le fait que l'élément de glissement (1) présente en outre une ou plusieurs couches intermédiaires (5) entre le corps de support (2) et le revêtement (3).

5. Elément de glissement selon la revendication 4, caractérisé par le fait qu'il comporte une couche intermédiaire (5) à base de carbonitrure de titane.

6. Elément de glissement selon les revendications 4 et 5, caractérisé par le fait que la couche intermédiaire (5) présente une épaisseur allant jusqu'à 2 $\mu$m.

7. Elément de glissement selon les revendications 1 à 6, caractérisé par le fait que le corps de support (2) et le revêtement (3) sont constitués d'oxyde d'aluminium.

8. Elément de glissement selon les revendications 1 à 6, caractérisé par le fait que le corps de support (2) est constitué d'oxyde d'aluminium, et le revêtement (3) est constitué de nitrure de silicium.

9. Elément de glissement selon les revendications 1 à 6, caractérisé par le fait que le corps de support (2) est constitué d'oxyde d'aluminium, et le revêtement (3) est constitué de carbure de silicium.

10. Elément de glissement selon les revendications 1 à 6, caractérisé par le fait que le corps de support (2) est constitué de nitrure de silicium, et le revêtement (3) est constitué d'oxyde d'aluminium.

11. Elément de glissement selon les revendications 1 à 6, caractérisé par le fait que le corps de support (2) est constitué d'oxyde d'aluminium, et le revêtement (3) est constitué de nitrure de titane, carbure de titane ou carbonitrure de titane.

12. Utilisation d'un élément de glissement selon la revendication 7, en tant que disque d'étanchéité dans un mélangeur.

13. Utilisation d'un élément de glissement selon la revendication 11, en tant qu'anneau glissant d'un joint à anneau glissant.

Fig. 1

Fig. 2

Fig. 3